# EUROPEAN PATENT APPLICATION

(11) **EP 0 712 190 A1**
(43) Date of publication of application: **15.05.1996**
(21) Application number: 95117087.7
(22) Date of filing: 30.10.1995
(51) Int. Cl.: H02G 3/26, F16L 3/00

(54) **Arrangement in connection with a supporting structure of a shelf system**

(30) Priority: 10.11.1994 FI 945298
(71) Applicant: NOKIA ALUMIINI OY, FIN-02400 Kirkkonummi (FI)
(72) Inventor: Lehtimaki, Pasi, FIN-05880 Hyvinkaa (FI)
(74) Representative: Howden, Christopher Andrew

(57) **Abstract**

The invention relates to an arrangement in connection with a supporting structure of a shelf system, in particular the supporting structure of a cable shelf system, the arrangement comprising a fixing rail (5) to be attached to a support stand and at least one supporting element (2) to be attached to the fixing rail to hold up the shelf system. In order to provide a flexible and simple arrangement, the supporting element (2) is arranged to be attached to the fixing rail (5) by means of a mechanical fastening means (3) that is substantially perpendicular to the longitudinal axis of the supporting element and that passes through the supporting element and the fixing rail.

## Description

The invention relates to an arrangement in connection with a supporting structure of a shelf system, in particular the supporting structure of a cable shelf system, the arrangement comprising a fixing rail to be attached to a support stand and at least one supporting element to be attached to the fixing rail to hold up the shelf system.

The above-described arrangements are nowadays well known in different fields of technology. The arrangements are used in particular in connection with electrotechnical installations, i.e. with supporting systems of cable shelves. The arrangements have also been used quite largely in connection with installations of cables other than electric cables, for example data transmission cables and the like.

In previously known arrangements, the supporting elements are attached to a fixing rail fastened for example to the wall or the ceiling by utilizing a parallelogram nut arrangement based on friction. In this arrangement the supporting element is attached to the fixing rail by utilizing a bolt in the direction of the supporting element, one end of the bolt being fitted into a back nut that has substantially the shape of a parallelogram and is placed between the flanges of the fixing rail. The nut is naturally also made to pass through a flange or the like formed in the supporting element. The supporting element can be tightened against the fixing rail at a desired height by tightening the bolt.

The drawback of the above-described known arrangement is that the tightening of the joint is based entirely on friction, wherefore the strength properties of the joint are not the best possible.

The purpose of the invention is to provide an arrangement by means of which the prior art drawbacks can be eliminated. This is achieved with the arrangement according to the invention, which is characterized in that the supporting element is arranged to be attached to the fixing rail by means of a mechanical fastening means that is substantially perpendicular to the longitudinal axis of the supporting element and that passes through the supporting element and the fixing rail.

The primary advantage of the invention is that the supporting structure can be provided with very low manufacturing costs and advantageous strength properties. The advantages result for example from the fact that the arrangement according to the invention comprises fewer components than the previously used arrangements. The arrangement according to the invention is also very light compared for example to an arrangement with a similar load-carrying capacity, such as a supporting block with a wall support. Another advantageous factor is that the manner of fastening in the arrangement according to the invention is not based entirely on friction as in the prior art arrangements.

The invention will be described in greater detail below by means of preferred embodiments shown in the accompanying drawing, in which
Figure 1 is a general view of the first embodiment of the arrangement according to the invention,
Figure 2 is a general view of the second embodiment of the arrangement according to the invention,
Figure 3 is a general view of the third embodiment of the arrangement according to the invention, and
Figure 4 is a general view of the fourth embodiment of the arrangement according to the invention.

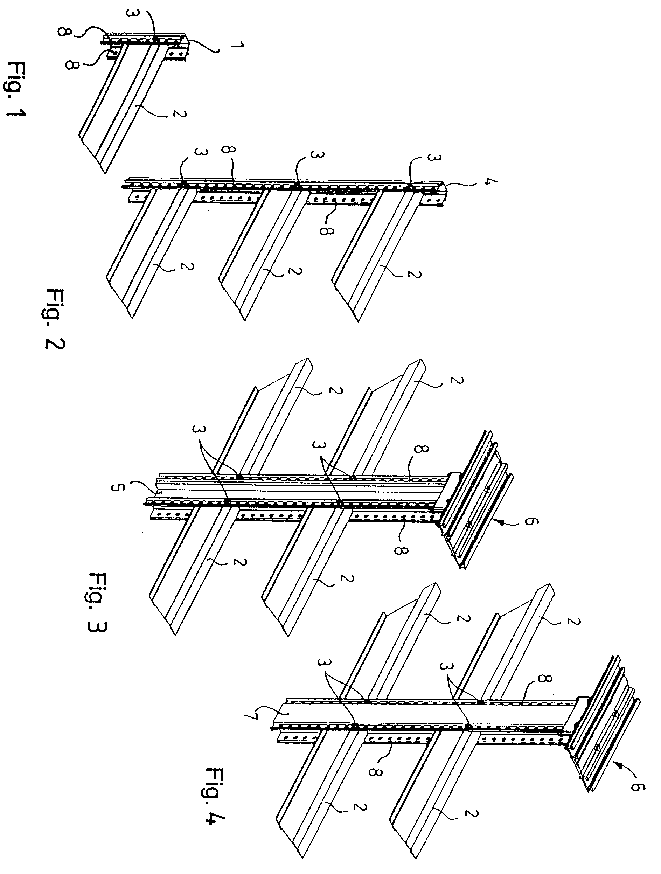

The figures show some of the preferred embodiments of the invention. In Figure 1, reference numeral 1 denotes a fixing rail to be attached to a support stand, and reference numeral 2 denotes a supporting element intended to hold up for example a cable shelf. The support stand can be any suitable surface, for example in the case of Figure 1 this surface may be a wall. The fixing rail 1 can be attached to the wall in any suitable manner, for example by bolting. The shelves are arranged to rest on the supporting elements in a manner known per se.

According to the essential idea of the invention, the supporting element 2 is arranged to be attached to the fixing rail 1 by means of a mechanical fastening means 3 that is substantially perpendicular to the longitudinal axis of the supporting element and that passes through the supporting element and the fixing rail. In the example of Figure 1, the mechanical fastening means 3 is formed of a bolt and nut combination that is arranged to pass through the flanges of the fixing rail 1 and the supporting element 2.

The embodiment according to Figure 2 corresponds substantially to the embodiment of Figure 1. The fixing rail 4 in the embodiment of Figure 2 is longer than the fixing rail 1 in the embodiment of Figure 1. The supporting elements 2, three in number in this embodiment, correspond to the supporting elements 2 of the embodiment of Figure 1. In this embodiment, too, the supporting elements 2 are attached to the fixing rail 4 by means of mechanical fastening means 3 in the same manner as described above in connection with Figure 1.

The embodiment according to Figure 3 differs substantially from the embodiments of Figures 1 and 2 in that in the embodiment of Figure 3 the fixing rail 5 is intended to be attached to the ceiling or some other corresponding surface instead of the wall. The fixing rail 5 is attached to the ceiling for example by means of a ceiling fastener 6. The supporting elements 2 are attached to the fixing rail also in this embodiment by means of mechanical fastening means 3 in the same way as in Figures 1 and 2 described above.

In the embodiment of Figure 3, the supporting elements 2 are fixed on both sides of the fixing rail 5 in the same manner. It is clear that the supporting elements can also be attached in some other manner, for example stepwise on each side, on one side only, etc.

The embodiment according to Figure 4 differs from the embodiment of Figure 3 only with respect to the shape of the fixing rail 7, which differs from the shape of the fixing rail 5 used in the embodiment of Figure 3. The fixing rail 7 can be attached to the ceiling by means of a ceiling fastener 6. The supporting elements 2 are attached to the fixing rail by means of mechanical fastening means 3 in the above-described manner.

All the fixing rails 1, 4, 5, 7 of the embodiments of the figures are provided along their entire length with holes 8 at predetermined distances from one another for the mechanical fastening means 3. Due to this detail, the supporting elements and therefore also the shelves, which are not shown in the figures, can be mounted on a desired level without any additional finishing steps to be performed on the site of assembly. It is thus possible to use the same mechanical fastening means 3, for example a bolt and nut unit, in all embodiments. The supporting elements 2 are naturally also provided with corresponding holes, which enable fastening by means of the aforementioned transverse bolt and nut units. Similar supporting elements can be used in all embodiments.

The above-described embodiments are not intended to limit the invention in any way, but the invention can be modified quite freely within the scope of the claims. Therefore it is clear that the arrangement according to the invention or its details do not necessarily have to be identical to those shown in the figures, but other kinds of arrangements are also possible. It is clear that for example the supporting elements do not have to be exactly like those shown in the figures, but these elements can be designed quite freely according to the needs in each occasion. Different kinds of supporting elements can be attached to the same fixing rail if such an arrangement is considered necessary. The fixing rail can also be designed quite freely etc.

The features disclosed in the foregoing description, in the following claims and/or in the accompanying drawings may, both separately and in any combination thereof, be material for realising the invention in diverse forms thereof.

## Claims

1. An arrangement in connection with a supporting structure of a shelf system, in particular the supporting structure of a cable shelf system, the arrangement comprising a fixing rail (1, 4, 5, 7) to be attached to a support stand and at least one supporting element (2) to be attached to the fixing rail to hold up the shelf system, **characterized** in that the supporting element (2) is arranged to be attached to the fixing rail (1, 4, 5, 7) by means of a mechanical fastening means (3) that is substantially perpendicular to the longitudinal axis of the supporting element and that passes through the supporting element and the fixing rail.

2. An arrangement according to claim 1, **characterized** in that the mechanical fastening means (3) comprises a bolt.

3. An arrangement according to claim 1 or 2, **characterized** in that the fixing rail (1, 4, 5, 7) is provided along its entire length with holes (8) at predetermined distances from one another for the mechanical fastening means (3).
